# EUROPEAN PATENT APPLICATION

(11) **EP 2 249 188 A1**
(43) Date of publication of application: **10.11.2010**
(21) Application number: 09159427.5
(22) Date of filing: 05.05.2009
(51) Int. Cl.: G02B 6/245, H02G 1/12

(54) **Apparatus and method for stripping at least one optical waveguide**

(71) Applicant: CCS Technology, Inc., Wilmington, DE 19803 (US)
(72) Inventor: Präcklein, Doris, 82008 Unterhaching (DE); Kossat, Rainer, 83229 Aschau (DE)
(74) Representative: Epping - Hermann - Fischer

(57) **Abstract**

An apparatus for stripping at least one optical waveguide comprises a first blade (104) and a second blade (105), the first (104) and the second blade (105) being disposed to cut the outer coating (103) of the at least one optical waveguide (101) and being disposed in a tranverse relationship with respect to each other. The outer coating (103) of the at least one optical waveguide (101) is cut transvers to the longitudinal extension of the at least one optical waveguide (101) and along the longitudinal extension of the at least one optical waveguide (101) and then the portion of the outer couting (103) having the longitudinal cut is stripped.

## Description

### Technical Field

The present disclosure relates to an apparatus for stripping at least one optical waveguide and a method to strip at least one optical waveguide.

### Background

When stripping optical waveguides for connectorization or the like a breaking of the fiber should be avoided. Conventionally, the coating of the fiber may be stripped in small pieces or a thermal stripper may be used.

It is desirable to provide an apparatus for stripping at least one optical waveguide and a method to strip at least one optical waveguide which operate reliably and efficient.

### Summary

According to an embodiment, an apparatus for stripping at least one optical waveguide comprises a first blade. The first blade is disposed to cut an outer coating of the at least one optical waveguide. The apparatus comprises a second blade. The second blade is disposed to cut the outer coating of the at least one optical waveguide. The first and the second blades are disposed in a transverse relationship with respect to each other.

In an embodiment, the first blade is adapted to cut the outer coating of the at least one optical waveguide transverse to the longitudinal extension of the at least one optical waveguide.

In an embodiment, the second blade is adapted to cut the outer coating of the at least one optical waveguide along the longitudinal extension of the at least one optical waveguide. The first and the second blades may be disposed adjacent to each other. It is also possible that more than one blade in either direction is used.

In an embodiment, the apparatus comprises a support and a top. The support and the top may be moveable with respect to each other. The first and the second blade may be disposed at one of the top and the support and be moveable with respect to the other one of the top and the support.

In an embodiment, the support and the top each comprise a first and a second part, the first parts each being moveable with respect to the respective second parts along the longitudinal extension of the at least one optical waveguide. The first blade and the second blade may be disposed at the second parts.

In an embodiment, the first blade comprises a first and a second part. The first part of the first blade may be disposed at the top. The second part of the first blade may be disposed at the support. The first part of the first blade and the second blade may be disposed at the second part of the top. The second part of the first blade may be disposed at the second part of the support.

In an embodiment, the apparatus comprises at least two clamping jaws to clamp the at least one optical waveguide. One of the clamping jaws may be disposed at the first part and one of the clamping jaws may be disposed at the second part.

The apparatus may be adapted to strip a part of the at least one optical waveguide which may be longer than 25 mm. The part preferably may be longer than 30 mm. The coating may comprise a diameter of more than 250 µm.

A method to strip at least one optical waveguide comprises cutting an outer coating of the at least one optical waveguide transverse to the longitudinal extension of the at least one optical waveguide. The outer coating of the at least one optical waveguide is cut along the longitudinal extension of the at least one optical waveguide. Then, the portion of the outer coating having the longitudinal cut is stripped.

According to an embodiment, a first blade is moved with respect to the at least one optical waveguide. A second blade may be moved with respect to the at least one optical waveguide. The at least one optical waveguide may be moved with respect to the first and the second blade. Then, the at least one optical waveguide is stripped.

It is to be understood that both the foregoing general description and the following detailed description present embodiments of the apparatus and method, and are intended to provide an overview or framework for understanding the nature and character of the apparatus and method as it is claimed. The accompanying drawings are included to provide a further understanding of the apparatus and method, and are incorporated into and constitute a part of this specification. The drawings illustrate various embodiments of the apparatus and method, and together with the description serve to explain the principals and operation of the apparatus and method.

### Brief description of the drawings

- Figures 1A and 1B: schematically show a detailed view of an apparatus according to an embodiment,
- Figures 2A and 2B: schematically show a detailed view of an apparatus according to a further embodiment.

### Detailed description

Reference will now be made in detail to the preferred embodiments, examples of which are illustrated in the accompanying drawings.

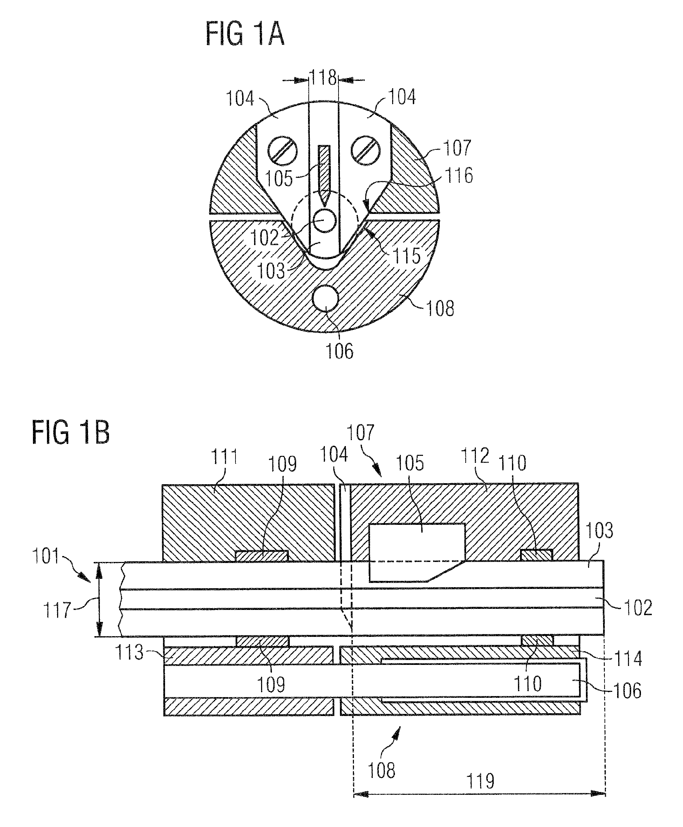

Figures 1A and 1B schematically show cross-sections of an apparatus for stripping one or more optical waveguides. The apparatus comprises a top 107, a support 108 and a first blade 104. The first blade is disposed at the top 107. The apparatus comprises a second blade 105. The second blade is disposed at the top 107. The support 108 comprises a groove 115. The groove 115 is adapted to hold an optical waveguide 101 such as an optical fiber during a stripping process.

The top 107 and the support 108 are moveable with respect to each other. For example, the top 107 and the support 108 are moveable between a closed position and an open position. The apparatus comprises a first state which corresponds to the closed position. The apparatus comprises a second state which corresponds to the open position. In the open position, the optical waveguide 101 can be inserted between the blades 104 and 105 and the groove 115. In the closed position, the blades 104 and 105 each cut in an outer coating 103 of the optical waveguide 101. In the open position, the optical waveguide 101 is able to move between the blades 104 and 105 and the support 108 without obstruction. The top 107 and the support 108 may be coupled with each other by one link or by more than one link.

The first blade 104 is disposed at the top 107 to cut the outer coating 103 of the optical waveguide 101 in the closed position. The cutting edges 116 of the first blade 104 are adapted to cut the outer coating 103 throughout the entire diameter of the coating 103. The first blade 104 is configured such that it cuts the outer coating 103 besides a fiber 102 of the optical waveguide 101. The first blade 104 may comprise at least two parts which are disposed at a distance 118. The distance 118 is at least as great as the diameter of the fiber 102.

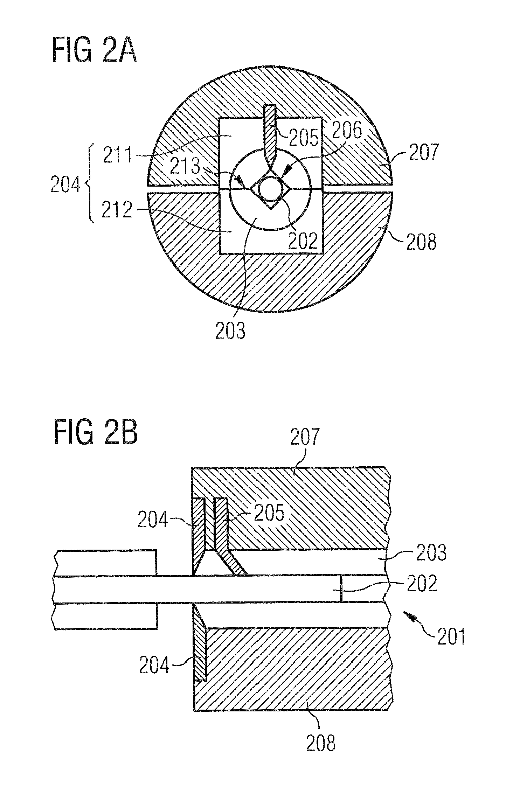

In another embodiment the first blade 104 comprises one part (Figure 2) having a notch, such that the fiber 102 is not damaged by the first blade 104 in the closed position, because the fiber is disposed at the notch and the first blade has no contact with the fiber at the notch.

The cutting edges 116 of the first blade 104 are oblique and correspond to the groove 115 of the support 108. The first blade 104 is adapted to cut the outer coating 103 transverse to the longitudinal extension of the at least one optical waveguide 101.

The second blade 105 is disposed at the top 107 to cut the outer coating 103 of the at least one optical waveguide 101 in the closed position. The second blade 105 is adapted to cut the outer coating 103 of the at least one optical waveguide along the longitudinal extension of the at least optical waveguide 101.

In Figure 1B the apparatus is shown in a cross-sectional view transverse in comparison with the view shown in Figure 1A. The support 108 comprises a first part 113 and a second part 114. The top 107 comprises a first part 111 and a second part 112. The first part 111 of the top 107 and the first part 113 of the support 108 are coupled to each other. The second part 112 of the top 107 and the second part 114 of the support 108 are coupled to each other.

Clamping jaws 109 are disposed at the first part 111 of the top 170 and the first part 113 of the support 108 respectively. The optical fiber 101 may be held by the clamping jaws 109 with respect to the first parts 111 and 113 in the closed position.

Clamping jaws 110 are disposed at the second part 112 of the top 107 and the second part 114 of the support 108 respectively. The optical waveguide 101 may be held by the clamping jaws 110 with respect to the second parts 112 and 114 in the closed position.

The first parts 111 and 113 are moveable with respect to the second parts 112 and 114 along the longitudinal extension of the optical waveguide 101. A guide rail 106 is coupled to the first part 113 and to the second part 114 of the support 108. The guide rail 106 is adapted to guide the movement of the first parts 111 and 113 with respect to the second parts 112 and 114.

To strip the optical waveguide 101, the optical waveguide 101 is inserted into the apparatus in the open position. The top 107 is moved with respect to the support 108 towards the support. The first part 111 and the second part 112 are moved with respect to the first part 113 and the second part 114 towards the first part 113 and the second part 114.

The first blade 104 cuts into the outer coating 103 transverse to the longitudinal extension of the optical waveguide 101. The second blade 105 cuts into the outer coating 103 along the longitudinal extension of the optical waveguide 101. The clamping jaws 109 and 110 fix the optical waveguide 101 with respect to the first parts 111 and 113 and the second parts 112 and 114 respectively.

By moving the first parts 111 and 113 away from the second parts 112 and 114 guided by the guide rail 106 the outer coating 103 of a part 119 of the optical waveguide 101 is removed from the fiber 102. The optical waveguide 101 is fixed to the first parts 111 and 113 and follows the movement of the first parts 111 and 113. The coating of the part 119 is held by the first blade 104 such that it cannot follow the movement of the first parts 111 and 113. Since the first blade 104 does not engage the fiber 102, the fiber 102 follows the movement of the first part 111 and 113.

The first parts 111 and 113 may be moved manually with respect to the second parts 112 and 114. In an other embodiment, the first parts 111 and 113 may be moved driven by a motor with respect to the second parts 112 and 114.

Due to the longitudinal cut affected by the second blade 105 the friction between the coating 103 and the fiber 102 is reduced. The cohesion between the outer coating 103 and the fiber 102 is reduced by the longitudinal cut of the second blade 105. Consequently, less stress is applied to the fiber during stripping, thereby reducing the risk of damage.

Since the first blade 104 and the second blade 105 are disposed adjecent to each other, the risk of tearing off the fiber can be reduced. The friction between the coating 103 and the fiber 102 is reduced near to the first blade 104.

Due to the longitudinal and transverse cut of the outer coating 103, outer coatings with a diameter 117 of more than 250 micrometer, preferably coatings comprising a diameter of about 900 micrometer, preferably coatings comprising a diameter of 900 micrometer, can be stripped. The part 119 may be longer than 25 milimeter, preferably longer than 30 milimeter, or even longer than 50 milimeter.

The apparatus may comprise more than one first blade 104. For example, the apparatus comprises two blades like the first blade 104 which are configured such that they cut the outer coating 103 besides the fiber 102 of the optical waveguide 101 transvers to the longitudinal extension of the at least one optical waveguide 101.

The apparatus may comprise more than one second blade 105. For example, the apparatus comprises two blades like the second blade which are disposed to cut the outer coating 103 of the at least one optical waveguide along the longitudinal extension of the at least optical waveguide 101.

The apparatus may be adapted to strip more than one optical waveguide. In this embodiment the apparatus comprises more than one second blade 105 which are disposed essentially in parallel such that each second blade is disposed to cut the outer coating along the longitudinal extension of the respective optical waveguide. In this embodiment, the first blade is adapted to cut more than one optical waveguide transverse to the longitudinal extension of the optical waveguides. In an other embodiment, more than one blade, for example two blades are disposed to cut more than one optical waveguide transverse to the longitudinal extension of the optical waveguides.

Figures 2A and 2B schematically show cross-sections of an apparatus for stripping one or more optical waveguides 201 according to a further embodiment.

The apparatus comprises a top 207 and a support 208. The top 207 and the support 208 are moveable with respect to each other. For example, the top 207 and the support are coupled by a link.

The apparatus comprises a first blade 204 which is adapted to cut an outer coating 203 of the at least one optical waveguide 201 transverse to the longitudinal extension of the least one optical waveguide 201. The first blade 204 comprises a first part 211 and a second part 212. The first part 211 of the first blade 204 is disposed at the top 207. The second part 212 of the first blade 204 is disposed at the support 208.

A second blade 205 is disposed at the top 207. The second blade is adapted to cut the outer coating of the at least one optical waveguide 201 along the longitudinal extension of the at least one optical waveguide. The first 204 and the second 205 blades are disposed in a transverse relationship with respect to each other.

The top 207 and the support 208 are moveable between a closed position and an open position. In the open position, the optical waveguide 201 can be inserted between the two parts 211 and 212 of the first blade 204. In the closed position, the two parts 211 and 212 of the first blade 204 cut in the coating 203 of the optical waveguide 201. In the open position the optical waveguide is able to move between the two parts 211 and 212 of the first blade 204 and the second blade 205 without obstruction.

The first part 211 and the second part 212 each comprise a notch 206 at a cutting edge 213, such that a fiber 202 of the optical waveguide 201 is not damaged, when the outer coating 203 is cut by the first blade 204. The first part 211 and the second part 212 may be symmetrically disposed.

As shown in Figure 2B, which shows a cross-sectional view transverse in comparison with Figure 2A, the two parts of the first blade 204 cut in the outer coating 203 from opposed directions. The optical waveguide is shown party pulled out of the apparatus and partly stripped.

When the optical waveguide 201 is pulled out of the apparatus, the coating 203 remains in the apparatus. The optical waveguide may be pulled out of the apparatus manually. The optical waveguide may be pulled out of the apparatus with the aid of a guide as descriped with respect to figures 1A and 1B. The stripped-off coating is held by the first blade 204. The fiber 202 can move between the first blade 204 without resistance. The second blade 205 cuts the coating 203 along the longitudinal extension of the optical waveguide 201.

Due to the longitudinal cut affected by the second blade 205 the friction between the outer coating 203 and the fiber 202 is reduced. The adhesion between the outer coating 203 and the fiber 202 is reduced by the longitudinal cut of the second blade 205.

Since the first blade 204 and the second blade 205 are disposed adjecent to each other, the risk of tearing off the fiber can be reduced. The friction between the coating 203 and the fiber 202 is reduced near to the slit caused by the first blade 204.

Due to the longitudinal and transverse cut of the outer coating 203, outer coatings with a diameter of more than 250 micrometer, preferably coatings comprising a diameter of about 900 micrometer, preferably coatings comprising a diameter of 900 micrometer, can be stripped reliably. The stripped-off part may be longer than 25 milimeter, preferably longer than 30 milimeter, or even longer than 50 milimeter.

The optical waveguides 101 and 201 each comprise a light guiding core in the core region of the optical waveguide. The core is surrounded by a cladding which is surrounded by the outer coating. The cladding may comprise a material with a lower refraction index than the core. A multitude of optical waveguides may be combined to an optical waveguide ribbon (fiber ribbon).

Although the present apparatus and method have been illustrated and described herein with reference to preferred embodiments and specific examples thereof, it will be readily apparent to those of ordinary skill in the art that other embodiments and examples can perform similar functions and/or achieve like results. All such equivalent embodiments and examples are within the spirit and scope of the present apparatus and method and are intended to be covered by the appended claims. It will also be apparent to those skilled in the art that various modifications and variations can be made to the present apparatus and method without departing from the spirit and scope of the apparatus and method. Thus, it is intended that the present apparatus and method cover the modifications and variations of this apparatus and method provided they come within the scope of the appended claims and their equivalents.

## Claims

1. An apparatus for stripping at least one optical waveguide (101), the apparatus comprising:
- a first blade (104), the first blade (104) being disposed to cut an outer coating (103) of the at least one optical waveguide (101);
- a second blade (105), the second blade (105) being disposed to cut the outer coating (103) of the at least one optical waveguide (101);
- the first (104) and the second (105) blades disposed in a tranverse relationship with respect to each other.

2. The apparatus according to claim 1, the first blade (104) adapted to cut the outer coating (103) of the at least one optical waveguide transvers to the longitudinal extension of the at least one optical waveguide (101).

3. The apparatus according to claim 1 or 2, the second blade (105) adapted to cut the outer coating (103) of the at least one optical waveguide along the longitudinal extension of the at least one optical waveguide (101).

4. The apparatus according to any of claims 1 to 3, the first (104) and the second (105) blades being disposed adjacent to each other.

5. The apparatus according to any of claims 1 to 4, comprising a support (108) and a top (107), the support (108) and the top (107) being movable with respect to each other, the first blade (104) and the second blade (105) being disposed at one of the top (107) and the support (108) and being movable with respect to the other one of the top (107) and the support (108).

6. The apparatus according to claim 5, the support (108) and the top (107) each comprising a first (111; 113) and a second (112; 114) part, the first parts (111; 113) each being movable with respect to the respective second parts (111; 113) along the longitudinal extension of the at least one optical waveguide (101), wherein the first (104) blade and the second blade (105) are disposed at the second parts (112; 114).

7. The apparatus according to any of claims 1 to 4,
- comprising a support (108) and a top (107), the support (108) and the top (107) being movable with respect to each other,
- the first blade (104; 204) comprising a first (211) and a second (212) part, the first part (211) of the first blade (104; 204) being disposed at the top (107; 207), the second part (212) of the first blade (104; 204) being disposed at the support (108; 208).

8. The apparatus according to claim 7, the support (108) and the top (107) each comprising a first (111; 113) and a second (112; 114) part, the first parts (111; 113) each being movable with respect to the respective second parts (111; 113) along the longitudinal extension of the at least one optical waveguide (101), wherein the first part (211) of the first blade (104; 204) and the second (105; 205) blade are disposed at the second part (112) of the top (107; 207) and the second part (212) of the first blade (104; 204) is disposed at the second part (114) of the support (107; 207).

9. The apparatus according to claim 6 or 8, comprising at least two clamping jaws (109; 110) to clamp the at least one optical waveguide (101), one (109) of the clamping jaws being disposed at the first part (111) and one (110) of the clamping jaws being disposed at the second part (112).

10. The apparatus according to any of claims 1 to 9, being adapted to strip a part of the at least one optical waveguide, the part being longer than 25 millimeter, preferably longer than 30 millimeter.

11. The apparatus according to any of claims 1 to 10, the first blade (104) and the second blade (105) being configured to cut the coating (103) comprising a diameter of more than 250 micrometer.

12. A method to strip at least one optical waveguide (101), the method comprising:
- cutting a outer coating (103) of the at least one optical waveguide (101) transvers to the longitudinal extension of the at least one optical waveguide (101),
- cutting the outer coating (103) of the at least one optical waveguide (101) along the longitudinal extension of the at least one optical waveguide (101) and then
- stripping the portion of the outer couting (103) having the longitudinal cut.

13. The method according to claim 12,
- moving a first blade (104) with respect to the at least one optical waveguide (101),
- moving a second blade (105) with respect to the at least one optical waveguide (101),
- moving the at least one optical waveguide (101) with respect to the first (104) and the second (105) blade and then
- stripping the at least one optical waveguide (101).
